# EUROPÄISCHE PATENTSCHRIFT

(11) **EP 3 314 998 B1**
(45) Veröffentlichungstag und Bekanntmachung des Hinweises auf die Patenterteilung: **05.06.2019**
(21) Anmeldenummer: 17401110.6
(22) Anmeldetag: 17.10.2017
(51) Int. Cl.: A01C 7/10

(54) **SÄMASCHINE MIT FÜLLSTANDSBESTIMMUNG**
SEED DRILL WITH FILL LEVEL MEASUREMENT
SEMOIR DOTÉ DE DISPOSITIF DE DÉTERMINATION DU NIVEAU DE REMPLISSAGE

(30) Priorität: 25.10.2016 DE 102016120288
(43) Veröffentlichungstag der Anmeldung: 02.05.2018
(73) Patentinhaber: Amazonen-Werke H. Dreyer GmbH & Co. KG, 49205 Hasbergen (DE)
(72) Erfinder: Rüsse, Mario, 49080 Osnabrück (DE)

(56) Entgegenhaltungen:
- EP-A2- 1 275 282
- DE-A1-102015 100 813
- US-A1- 2011 278 381

## Beschreibung

Die Erfindung betrifft eine landwirtschaftliche Sämaschine gemäß dem Oberbegriff des Patentanspruches 1.

Eine derartige Sämaschine weist typischerweise zumindest einen Vorratsbehälter zur Bevorratung von auszubringendem Material, insbesondere Saatgut und/oder Düngemittel auf. In seinem unteren Bereich weist der Vorratsbehälter einen Auslaufbereich auf, welcher trichterförmig ausgebildet ist. Unterhalb des trichterförmigen Auslaufbereichs ist zumindest ein Dosierorgan angeordnet. Das zumindest eine Dosierorgan dient der einstellbaren Einspeisung des auszubringenden Materials in zu Ausbringelementen führende Förderleitungen.

Die Kenntnis des momentanen Füllstands des Vorratsbehälters ist, insbesondere während der Durchführung eines Ausbringvorgangs, für einen Bediener von besonderer Bedeutung. Anhand des Füllstandes kann der Bediener beispielsweise sicherstellen, dass sich der Vorratsbehälter nicht unbemerkt leert und/oder absehen, wann eine erneute Befüllung erfolgen sollte, um den Ausbringvorgang ungehindert fortzusetzen zu können. Zu diesem Zweck verfügen derartige Vorratsbehälter über zumindest eine Füllstandserfassungsvorrichtung.

Ein Vorratsbehälter mit einer typischen Füllstandserfassungsvorrichtung ist beispielsweise in der DE 10 2016 119 777 beschrieben. Der Füllstand wird über ein Auftriebselement ermittelt, welches auf der Oberfläche des im Vorratsbehälter bevorrateten Materials aufliegt. Mittels geeigneter Erfassungsvorrichtungen, wird die Position eines solchen Auftriebselements innerhalb des Vorratsbehälters erfasst. Aus der erfassten Position des Auftriebselements lässt sich der Füllstand des bevorrateten Materials innerhalb des Vorratsbehälters berechnen.

Nachteilig bei dieser Ausführungsform ist, dass der derart ermittelte Füllstandswert nur eine geringe Genauigkeit aufweist. Durch Unebenheiten und/oder Neigungen des Untergrunds kann das bevorratete Material verrutschen und/oder innerhalb des Vorratsbehälters ungleichmäßig verteilt sein. Saatgut und/oder Düngemittel sind typischerweise körnige Materialien und weisen daher nur eine geringe Fließfähigkeit auf. Somit verbleibt das bevorratete körnige Material - anders als beispielsweise Flüssigkeiten - ungleichmäßig verteilt. Dadurch ist der mithilfe eines Auftriebselements ermittelte Füllstandswert nur für einen Teil des Behältervolumens korrekt. Die Genauigkeit kann beispielsweise durch das Hinzuziehen eines Messwertes für die Neigung des Vorratsbehälters und/oder der Sämaschine verbessert werden.

Ein Vorratsbehälter mit einer weiteren Füllstandserfassungsvorrichtung wird beispielsweise in der DE 10 2016 117 945 beschrieben. Der Füllstand des Vorratsbehälters wird dabei kapazitiv erfasst. Dazu umfasst der Vorratsbehälter zumindest zwei Elektroden, die in einer geeigneten Geometrie angeordnet sind. Zwischen den Elektroden liegt eine elektrische Spannung an, welche eine Potentialdifferenz bewirkt. Somit bilden die Elektroden im Inneren des Vorratsbehälters einen Kondensator. Dessen Kapazität wird durch die dielektrischen Eigenschaften des innerhalb seines Volumens befindlichen Saatgut und/oder Düngemittels beeinflusst. Diese Beeinflussung hängt dabei von dem durch das Saatgut und/oder Düngemittel besetzten Volumenanteil des Kondensators bzw. Behälters ab. Somit ist aus dem gemessenen Kapazitätswert der Behälterfüllstand mit höherer Genauigkeit ermittelbar, als mithilfe eines Auftriebselements.

Dennoch ist auch hier eine exakte Bestimmung des Füllstandes, insbesondere im Falle einer ungleichmäßigen Verteilung des bevorrateten Materials, mit großen Fehlern behaftet, da die Ortsauflösung einer kapazitiven Füllstandserfassungsvorrichtung bei Verwendung einer wirtschaftlichen Elektroden-Anzahl gering ist. Diesen Nachteil kann auch die zusätzliche Erfassung der Neigung des Vorratsbehälters und/oder der Sämaschine kaum in geeigneter Weise überwinden, da eine kapazitive Füllstandserfassung bereits eine Aussage über den besetzten Volumenanteil des Kondensators bzw. des Vorratsbehälters liefert.

Eine Streumaschine mit einer Füllstandserfassungsvorrichtung ist aus US 2011/278381 A1 bekannt.

Der Erfindung liegt daher die Aufgabe zugrunde, die Genauigkeit bei der Erfassung des Füllstandes von bevorratetem, körnigem Material innerhalb des Vorratsbehälters einer Sämaschine weiter zu steigern.

Diese Aufgabe wird erfindungsgemäß dadurch gelöst, dass die Auswerteeinheit derart ausgebildet ist, dass sie zumindest einen Messwert der Füllstandserfassungsvorrichtung mit zumindest einem für die theoretische Ausbringmenge ermittelten Wert zur Bestimmung des Füllstandes des im Vorratsbehälter bevorrateten Materials kombiniert.

Der Wert für die theoretische Ausbringmenge wird mithilfe eines an sich bekannten Abdreh- und/oder Kalibriervorgangs zu Beginn des Ausbringvorgangs bestimmt.

In einer alternativen Ausführungsform ist die Ermittlung der theoretischen Ausbringmenge auch mittels Erfassungseinrichtungen des den Vorratsbehälter tatsächlich verlassenden Massenstroms möglich. Diese Erfassungsvorrichtungen können beispielsweise den zu den Ausbringelementen führenden Förderleitungen zugeordnet sein.

Für den Abdreh- und/oder Kalibriervorgang stellt der Bediener der Sämaschine einen den Erfordernissen entsprechenden Soll-Wert für die Ausbringmenge der Sämaschine ein. Das zumindest eine Dosierorgan der Sämaschine dosiert eine theoretisch dem Soll-Wert entsprechende Saatgutmenge in einen dafür vorgesehenen Kalibrierbehälter. Die tatsächlich in den Kalibrierbehälter beförderte Ist-Menge wird anschließend mittels einer Waage oder mittels einer anderen geeigneten Erfassungsvorrichtung erfasst. Nach einem Vergleich von Soll- und Ist-Menge wird die Einstellung des zumindest einen Dosierorgans in geeigneter Weise verändert, um etwaig aufgetretene Unterschiede zwischen Ist- und Soll-Menge auszugleichen.

Ein derartiger Abdreh- und/oder Kalibriervorgang ist stets durchführbar, wenn sich die Sämaschine nicht in einem Ausbringmodus befindet. Dies ist beispielsweise der Fall, bevor der Ausbringvorgang beginnt, sobald dieser unterbrochen ist oder wenn im Vorgewende die Ausbringelemente ausgehoben sind (Wendemodus). Zudem Ist es möglich, dass ein solcher Abdreh- und/oder Kalibriervorgang in geeigneten Zeitabständen und/oder bei Bedarf wiederholt wird. Dies verhindert Abweichungen zwischen Ist- und Soll-Menge. Dabei kann der Bediener mittels geeigneter Überwachungsmittel über das Anzeige- und/oder Eingabeelement auf die Notwendigkeit eines erneuten Abdreh- und/oder Kalibriervorgangs hingewiesen werden. Der Bediener kann dann oder nach eigenem Ermessen einen erneuten Abdreh- und/oder Kalibriervorgang einleiten. Es ist ebenfalls möglich, dass ein Abdreh- und/oder Kalibriervorgang zumindest annähernd regelmäßig bei geeigneten Gelegenheiten, beispielsweise im Wendemodus, automatisiert durchgeführt wird.

Die mit der Soll-Menge abgeglichene Ist-Menge wird als Wert für die theoretische Ausbringmenge einer der Auswerteeinheit zugeordneten Speichereinheit zugeführt. Die Datenübertragung kann dabei mittels Datenleitungen oder drahtlos zwischen dem zumindest einen Dosierorgan bzw. dessen Steuereinheit und der der Auswerteeinheit zugeordneten Speichereinheit erfolgen. Alternativ ist eine manuelle Eingabe des Werts für die theoretische Ausbringmenge durch den Bediener über das Anzeige- und/oder Eingabeelement möglich.

Der Messwert für den Füllstand des zu verteilenden Materials innerhalb des Vorratsbehälters wird beispielsweise mithilfe einer der zuvor beschriebenen Füllstandserfassungsvorrichtungen ermittelt. Auch kontaktfrei ausgeführte Füllstandserfassungsvorrichtungen, beispielsweise basierend auf, elektromagnetischen Wellen oder Schallwellen, sind möglich. Die ermittelten Messwerte werden in beschriebener Weise der Auswerteeinheit zugeführt. Dabei ist dem Vorratsbehälter die Füllstandserfassungsvorrichtung in zumindest einfacher, bevorzugt in mehrfacher Ausführung zugeordnet. Die Messung des Füllstands erfolgt kontinuierlich oder in geeigneten Zeitabständen, um dem Bediener eine aktuelle, insbesondere momentane, Füllstandsinformation bereitzustellen.

Vorteilhaft bei dieser Kombination des Messwerts der zumindest einen Füllstandserfassungsvorrichtung mit dem zumindest einen Werts für die theoretische Ausbringmenge ist, dass durch die Kombination der Werte die Genauigkeit des resultierenden Füllstandsendwerts erheblich gesteigert wird. Die im Vorratsbehälter verbleibende Menge zu verteilenden Materials wird durch die theoretische Ausbringmenge, welche mit der Füllstandsänderung des Vorratsbehälters rechnerisch korrespondiert, beeinflusst. Somit können durch die Kombination des Messwerts der zumindest einen Füllstandserfassungsvorrichtung mit dem zumindest einen Werts für die theoretische Ausbringmenge die Fehler beider Einzelmessungen kompensiert oder zumindest deutlich reduziert werden.

Zudem fließt bei der erfindungsgemäßen Füllstandserfassung mit dem Wert der theoretischen Ausbringmenge eine Größe in die Ermittlung des Füllstandsendwertes ein, welcher essentiell für den Ausbringvorgang ist. Zur Optimierung des Ausbringvorgangs und des dabei erzeugten Säbildes ist die genaue Kenntnis der theoretischen Ausbringmenge von großer Bedeutung. Daher wird die theoretische Ausbringmenge beim Betrieb einer Sämaschine stets mit höchster Sorgfalt und Genauigkeit gemessen. Die Nutzung dieses Wertes zur Füllstandserfassung ist somit sehr zeiteffizient sowie ökonomisch, weil kein zusätzlicher Wert ermittelt werden muss und daher auch keine zusätzliche Erfassungseinrichtung erforderlich ist.

Die Ermittlung des Füllstandsendwertes erfolgt mithilfe der Auswerteeinheit. Zusätzlich zu den ihr zugeführten Messwerten greift sie dabei auf geeignete, in der ihr zugeordneten Speicheinheit hinterlegte Zusammenhänge zurück, welche beispielsweise die Geometrie des Vorratsbehälters oder Eigenschaften des bevorrateten Materials umfassen.

Die mittels Abdreh- und/oder Kalibriervorgang ermittelte theoretische Ausbringmenge ist typischerweise auf eine normierte Fläche bezogen. Der exakte Wert für die theoretische Ausbringmenge variiert daher mit der momentanen Vortriebsgeschwindigkeit der Sämaschine: der eine konkrete Füllstandsänderung des Vorratsbehälters bewirkende, den Vorratsbehälter tatsächlich verlassende Massenstrom steigt mit der Vortriebsgeschwindigkeit an. Diese Variation ist rechnerisch leicht zu erfassen und in der Ermittlung des Füllstandsendwerts zu implementieren.

Dem Bediener wird der Füllstandsendwert mithilfe des Anzeige- und/oder Eingabeelements angezeigt. Dabei kann die Ausgabe des Füllstandendwertes beispielsweise als im Vorratsbehälter verbleibendes Restvolumen oder als belegter Volumenanteil des Vorratsbehälters erfolgen.

Es wird ein Vorteil dadurch erreicht, dass die Auswerteeinheit derart ausgebildet ist, dass sie den zumindest einen Messwert der Füllstandserfassungsvorrichtung mit dem zumindest einen für die theoretische Ausbringmenge ermittelten Wert über einen Algorithmus kombiniert, wobei der Algorithmus einen Kalman-Filter umfasst.

Die erreichbare Genauigkeit der Messwerte der zumindest einen Füllstanderfassungsvorrichtung bzw. der Ermittlung der theoretischen Ausbringmenge ist durch die jeweils verwendeten Messverfahren bekannt oder zumindest abschätzbar. Diese Unsicherheiten werden dem Kalman-Filter als Parameter zugeführt und bilden somit die Gewichtungsfaktoren der ihnen zugeordneten Messgrößen.

Es ist weiterhin vorteilhaft, dass die Auswerteeinheit derart ausgebildet ist, dass sie die von dem Kalman-Filter verwendeten Gewichtungsfaktoren in Abhängigkeit vom Betrieb der Sämaschine anpasst. Eine Veränderung der Gewichtungsfaktoren bestimmt das statistische Gewicht des jeweiligen Messwerts innerhalb des Algorithmus. Dadurch kann entsprechend des Betriebs der Sämaschine veränderten Genauigkeiten der Messwerte der in den Algorithmus einfließenden Messgrößen Rechnung getragen werden. Die Abhängigkeit vom Betrieb der Sämaschine ist beispielsweise über die Betriebsparameter der Sämaschine und/oder deren Betriebsmodi gegeben. Zu den wichtigsten Betriebsparametern gehören unter anderen Vortriebsgeschwindigkeit, Neigung, und/oder Position der Sämaschine. Als Betriebsmodi lassen sich ein Ausbringmodus, bei welchem Saatgut in den Erdboden abgelegt wird, ein Wendemodus, bei dem die Ausbringelemente nicht in den Erdboden eingreifen und die Sämaschine auf der zu bearbeitenden Fläche manövriert wird, und ein Befüllmodus, bei dem der Vorratsbehälter der Sämaschine mit Saatgut und/oder Düngemittel befüllt wird, unterscheiden.

Durch diese Anpassung an die Betriebsparameter und/oder Betriebsmodi der Sämaschine ist es in vorteilhafter Weise möglich, dem jeweils als genauer eingestuften Messwert ein erhöhtes statistisches Gewicht zuzuweisen. Dadurch wird die Genauigkeit der Ermittlung des Füllstandsendwerts erheblich verbessert.

Es ist von Vorteil, dass die Auswerteeinheit derart ausgebildet ist, dass sie die von dem Kalman-Filter verwendeten Gewichtungsfaktoren in Abhängigkeit von der Geschwindigkeit der Sämaschine und/oder der Neigung der Sämaschine und/oder in Abhängigkeit davon anpasst, ob die Sämaschine in einem Befüllmodus, einem Wendemodus oder einem Ausbringmodus betrieben wird. Auf diese Weise wird die Füllstandserfassung an die wichtigsten Betriebsparameter und/oder Betriebsmodi angepasst und dadurch die deren Genauigkeit der Füllstandserfassung für diese wichtigsten Betriebsparameter und/oder Betriebsmodi erheblich verbessert.

Zur Durchführung der erfindungsgemäßen Füllstandserfassung ist ein Verfahren vorgesehen, welches in vorteilhafter Weise die folgenden Verfahrensschritte umfasst:
- Durchführen eines Abdreh- und/oder Kalibriervorgangs zur Bestimmung zumindest eines Werts für die theoretische Ausbringmenge,
- Bestimmen zumindest eines Messwertes mittels der Füllstandserfassungsvorrichtung,
- Bestimmen des Füllstandes des Vorratsbehälters durch die Auswerteeinheit, basierend auf der Kombination des zumindest einen Messwertes der Füllstandserfassungsvorrichtung mit dem zumindest einen Wert für die theoretische Ausbringmenge.

Durch die Durchführung dieses Verfahrens kann in der zuvor beschriebenen Weise der Füllstand des Vorratsbehälters zuverlässig und sehr genau bestimmt werden.

Das erfindungsgemäße Verfahren wird für eine exakte Bestimmung des momentanen Füllstands des Vorratsbehälters in geeigneten Zeitabständen wiederholt oder kontinuierlich durchgeführt. Der Messwert für die theoretische Ausbringmenge wird mithilfe eines Abdreh- und/oder Kalibriervorgangs bestimmt und in der der Auswerteeinheit hinterlegten Speichereinheit abgelegt.

Es ist dabei von Vorteil, dass die Auswerteeinheit den zumindest einen Messwert der Füllstandserfassungsvorrichtung mit dem zumindest einem für die theoretische Ausbringmenge ermittelten Wert über einen Algorithmus kombiniert und der Algorithmus einen Kalman-Filter umfasst, wobei insbesondere von dem Kalman-Filter verwendete Gewichtungsfaktoren in Abhängigkeit von dem Betrieb der Sämaschine angepasst werden. In der zuvor beschriebenen Weise wird somit die Füllstanderfassung an die Betriebsparameter und/oder Betriebsmodi der Sämaschine angepasst. Diese Anpassung erhöht die Genauigkeit der Füllstandserfassung erheblich.

Ein in der Speichereinheit hinterlegter Wert für die theoretische Ausbringmenge fließt solange in den Algorithmus ein, bis durch einen weiteren Abdreh- und/oder Kalibriervorgang ein aktueller Wert für die theoretische Ausbringmenge ermittelt wird. Dieser ersetzt dann den vorherigen hinterlegten Wert.

In der bevorzugten Ausführungsform der erfindungsgemäßen Füllstandserfassung wird zur Ermittlung des Füllstandsendwerts ein Kalman-Filter verwendet. In alternativen Ausführungsformen sind ebenso andere digitale Filter zur Ermittlung eines Füllstandsendwerts möglich.

Neben dem Messwert für den Füllstand des Vorratsbehälters und dem Messwert für die theoretische Ausbringmenge können auch weitere Messwerte geeigneter zusätzlicher Erfassungseinrichtungen in den Algorithmus zur Ermittlung des Füllstandsendwerts einfließen. Beispielsweise ist ein Neigungssensor möglich, um eine ungleichmäßige Verteilung des bevorrateten Materials innerhalb des Vorratsbehälters abzuschätzen. Dies würde die Genauigkeit der Ermittlung des Füllstandsendwerts weiter erhöhen.

Weitere Einzelheiten der Erfindung sind der Beispielsbeschreibung und der Zeichnung zu entnehmen. Die Zeichnung zeigt schematisch einen typischen Vorratsbehälter einer Sämaschine in seitlichem Querschnitt.

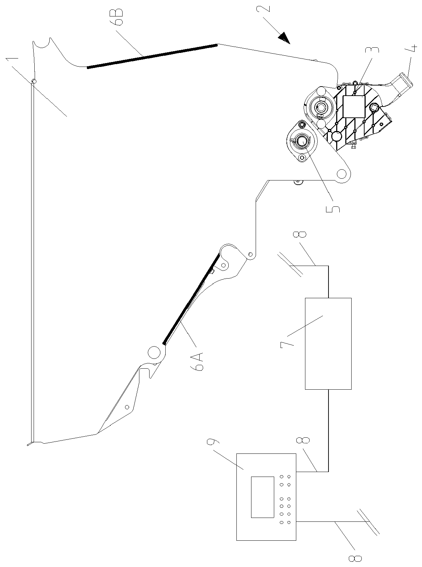

Eine landwirtschaftliche Sämaschine, weist einen Vorratsbehälter 1 zur Bevorratung von zu verteilendem Material, vorzugsweise Saatgut und/oder Düngemittel, auf. Ein derartiger Vorratsbehälter 1 ist in Fig. 1 gezeigt. Der Vorratsbehälter stützt sich auf einem nicht dargestellten Rahmen der landwirtschaftlichen Sämaschine ab, wobei die Sämaschine zum Anbau oder Anhängen an eine nicht dargestellte landwirtschaftliche Zugmaschine vorgesehen ist.

Der Vorratsbehälter 1 weist einen Auslaufbereich 2 auf. Unterhalb des Auslaufbereichs 2 ist zumindest ein Dosierorgan 3 angeordnet. Das zumindest eine Dosierorgan 3 dient der Einspeisung des auszubringenden Saatguts und/oder Düngemittels in zu Ausbringelementen führende Förderleitungen 4.

Im unteren Bereich des Vorratsbehälters 1 ist oberhalb der Dosierorgane 3 eine Rühreinrichtung 5 angeordnet. Im Beispiel der Fig. 1 ist die Rühreinrichtung 5 als drehbar gelagerte Rührwelle ausgeführt. Mithilfe der Rühreinrichtung 5 werden Verstopfungen und/oder Verklumpungen des zu verteilenden Materials im Bereich des zumindest einen Dosierorgans vermieden.

Dem Vorratsbehälter 1 ist zumindest eine Füllstandserfassungsvorrichtung zugeordnet. Fig. 1 zeigt zwei einander gegenüberliegende Elektroden 6A,6B einer kapazitiv arbeitenden Füllstanderfassungsvorrichtung. In an sich bekannter Weise erfasst die kapazitive Füllstandserfassungsvorrichtung einen Messwert über den Füllstand des innerhalb des Vorratsbehälters bevorrateten Materials.

Anders ausgeführte, an sich bekannte Füllstandserfassungsvorrichtungen sind ebenfalls in alternativen Ausführungsformen der erfindungsgemäßen Sämaschine möglich.

Der mittels Füllstandserfassungsvorrichtung gemessene Füllstandswert wird an eine Auswerteeinheit 7 übermittelt. Die Datenübermittlung erfolgt in bevorzugter Weise mittels Datenleitungen oder drahtlos.

Zur Kalibrierung der durch die Sämaschine auszubringenden Saatgutmenge ist ein Abdreh- und/oder Kalibriervorgang vorgesehen. Für den Abdreh- und/oder Kalibriervorgang stellt der Bediener der Sämaschine einen den Erfordernissen entsprechenden Soll-Wert für die Ausbringmenge der Sämaschine ein. Das zumindest eine Dosierorgan 3 der Sämaschine dosiert eine theoretisch dem Soll-Wert entsprechende Saatgutmenge in einen dafür vorgesehenen Kalibrierbehälter. Die tatsächlich in den Kalibrierbehälter beförderte Ist-Menge wird anschließend mittels einer Waage oder mittels einer anderen geeigneten Erfassungsvorrichtung erfasst. Nach einem Vergleich von Soll- und Ist-Menge wird die Einstellung des zumindest einen Dosierorgans 3 in geeigneter Weise verändert, um etwaig aufgetretene Unterschiede zwischen Ist- und Soll-Menge auszugleichen.

Ein derartiger Abdreh- und/oder Kalibriervorgang ist stets durchführbar, wenn sich die Sämaschine nicht in einem Ausbringmodus befindet. Dies ist beispielsweise der Fall, bevor der Ausbringvorgang beginnt, sobald dieser unterbrochen ist oder wenn im Vorgewende die Ausbringelemente ausgehoben sind (Wendemodus). Zudem Ist es möglich, dass ein solcher Abdreh- und/oder Kalibriervorgang in geeigneten Zeitabständen und/oder bei Bedarf wiederholt wird. Dies verhindert Abweichungen zwischen Ist- und Soll-Menge. Dabei kann der Bediener mittels geeigneter Überwachungsmittel über ein Anzeige- und/oder Eingabeelement 9 auf die Notwendigkeit eines erneuten Abdreh- und/oder Kalibriervorgangs hingewiesen werden. Der Bediener kann dann oder nach eigenem Ermessen einen erneuten Abdreh- und/oder Kalibriervorgang einleiten. Es ist ebenfalls möglich, dass ein Abdreh- und/oder Kalibriervorgang zumindest annähernd regelmäßig bei geeigneten Gelegenheiten, beispielsweise im Wendemodus, automatisiert durchgeführt wird.

Die mit der Soll-Menge abgeglichene Ist-Menge wird als Wert für die theoretische Ausbringmenge einer der Auswerteeinheit 7 zugeordneten Speichereinheit zugeführt. Die Datenübertragung kann dabei mittels Datenleitungen 8 oder drahtlos zwischen dem zumindest einen Dosierorgan 3 bzw. dessen Steuereinheit und der der Auswerteeinheit 7 zugeordneten Speichereinheit erfolgen. Alternativ ist eine manuelle Eingabe des Werts für die theoretische Ausbringmenge durch den Bediener über das Anzeige- und/oder Eingabeelement 9 möglich. Der in der Speichereinheit hinterlegte Wert für die theoretische Ausbringmenge bleibt aktuell bis durch einen erneuten Abdreh- und/oder Kalibriervorgang ein neuer Wert erzeugt wird. In den Algorithmus fließt stets der aktuelle Wert für die theoretische Ausbringmenge ein.

Die Auswerteeinheit 7 kombiniert über einen Algorithmus den von der Füllstandserfassungsvorrichtung ermittelten Messwert für den Füllstand des Vorratsbehälters 1 mit dem ermittelten Wert für die theoretische Ausbringmenge. Der Algorithmus umfasst dabei einen Kalman-Filter zur Kombination der ermittelten Messwerte. Somit lassen sich dem Algorithmus neben den genannten Messwerten auch deren erreichbare Genauigkeiten als Gewichtungsfaktoren zuführen. Die Gewichtungsfaktoren bestimmen das statistische Gewicht der ihnen jeweils zugeordneten Messgröße im Algorithmus.

Während eines Ausbringvorgangs werden die Gewichtungsfaktoren in Abhängigkeit von den Betriebsparametern und/oder Betriebsmodi der Sämaschine verändert. Eine Veränderung der Gewichtungsfaktoren bestimmt das statistische Gewicht des jeweiligen Messwerts innerhalb des Algorithmus in Abhängigkeit von aktuellen Betriebsparametern und/oder Betriebsmodi. Dadurch kann entsprechend des Betriebs der Sämaschine veränderten Genauigkeiten der Messwerte der in den Algorithmus einfließenden Messgrößen Rechnung getragen werden. Zu den wichtigsten Betriebsparametern gehören unter anderen Vortriebsgeschwindigkeit, Neigung, und/oder Position der Sämaschine. Als Betriebsmodi werden ein Ausbringmodus, bei welchem Saatgut in den Erdboden abgelegt wird, ein Wendemodus, bei dem die Ausbringelemente nicht in den Erdboden eingreifen und die Sämaschine auf der zu bearbeitenden Fläche manövriert wird, und ein Befüllmodus, bei dem der Vorratsbehälter der Sämaschine mit Saatgut und/oder Düngemittel befüllt wird, unterschieden.

Mithilfe des Algorithmus wird aus den erfassten, jeweils aktuellen Messwerten unter Berücksichtigung ihrer aktuellen Gewichtungsfaktoren ein sehr genauer Füllstandsendwert erzeugt.

Der Füllstandsendwert wird drahtlos oder mithilfe von Datenleitungen 8 von der Auswerteeinheit 7 an das Anzeige- und/oder Eingabeelement 9 übermittelt. Über das Anzeige- und/oder Eingabeelement wird dem Bediener der momentane Füllstandsendwert angezeigt. Die Anzeige des Füllstandendwertes erfolgt beispielsweise als im Vorratsbehälter verbleibendes Restvolumen oder als belegter Volumenanteil des Vorratsbehälters.

Während eines Ausbringvorgangs wird der Füllstandsendwert in geeigneten Zeitabständen oder kontinuierlich ermittelt, um dem Bediener stets den momentanen Füllstandsendwert anzuzeigen.

Dem Algorithmus können in bevorzugter Weise weitere Messgrößen zugeführt werden, um die Genauigkeit der Füllstandserfassung weiter zu verbessern. Messwerte von Neigungssensoren beispielsweise lassen Rückschlüsse auf die Verteilung des begrenzt fließfähigen Materials im Inneren des Vorratsbehälters zu.

Auf die beschriebene Weise wird eine Füllstandserfassung erreicht, die hochgenau einen Echtzeitwert für den Füllstand eines Vorratsbehälters einer Sämaschine bereitstellt. Dabei ist die Erfassung auch an die Betriebsbedingungen der Sämaschine anpassbar.

## Patentansprüche

1. Landwirtschaftliche Sämaschine mit einem Vorratsbehälter (1) zur Bevorratung zumindest eines auzubringenden Materials, mit zumindest einer dem Vorratsbehälter (1) zugeordneten Füllstandserfassungsvorrichtung, mit einer mit der Füllstandserfassungsvorrichtung verbundenen, eine Speichereinheit umfassenden Auswerteeinheit (7), wobei die Auswerteeinheit (7) ein Anzeige- und/oder Eingabeelement (9) aufweist, mit Einrichtungen zur Durchführung eines Abdreh- und/oder Kalibriervorgangs zur Ermittlung eines Werts für die theoretische Ausbringmenge der Sämaschine, wobei der Auswerteeinheit (7) ein für die theoretische Ausbringmenge ermittelter Wert zuführbar ist, **dadurch gekennzeichnet, dass** die Auswerteeinheit (7) derart ausgebildet ist, dass sie zumindest einen Messwert der Füllstandserfassungsvorrichtung mit zumindest einem für die theoretische Ausbringmenge ermittelten Wert zur Bestimmung des Füllstandes des im Vorratsbehälter (1) bevorrateten Materials kombiniert.

2. Sämaschine nach Anspruch 1, **dadurch gekennzeichnet, dass** die Auswerteeinheit (7) derart ausgebildet ist, dass sie den zumindest einen Messwert der Füllstandserfassungsvorrichtung mit dem zumindest einen für die theoretische Ausbringmenge ermittelten Wert über einen Algorithmus kombiniert, wobei der Algorithmus einen Kalman-Filter umfasst.

3. Sämaschine nach zumindest einem der vorangegangenen Ansprüche, **dadurch gekennzeichnet, dass** die Auswerteeinheit (7) derart ausgebildet ist, dass sie die von dem Kalman-Filter verwendeten Gewichtungsfaktoren in Abhängigkeit vom Betrieb der Sämaschine anpasst.

4. Sämaschine nach zumindest einem der vorangegangenen Ansprüche, **dadurch gekennzeichnet, dass** die Auswerteeinheit (7) derart ausgebildet ist, dass sie die von dem Kalman-Filter verwendeten Gewichtungsfaktoren in Abhängigkeit von der Geschwindigkeit der Sämaschine und/oder der Neigung der Sämaschine und/oder in Abhängigkeit davon anpasst, ob die Sämaschine in einem Befüllmodus, einem Wendemodus oder einem Ausbringmodus betrieben wird.

5. Verfahren zur Bestimmung des Füllstandes eines Vorratsbehälters (1) einer landwirtschaftlichen Sämaschine mit einem Vorratsbehälter (1) zur Bevorratung zumindest eines auzubringenden Materials, mit zumindest einer dem Vorratsbehälter (1) zugeordneten Füllstandserfassungsvorrichtung, mit einer mit der Füllstandserfassungsvorrichtung verbundenen Auswerteeinheit (7), wobei die Auswerteeinheit (7) ein Anzeige- und/oder Eingabeelement (9) aufweist, mit Einrichtungen zur Durchführung eines Abdreh- und/oder Kalibriervorgangs der Sämaschine zur Ermittlung eines Werts für die theoretische Ausbringmenge der Sämaschine, wobei der Auswerteeinheit (7) ein für die theoretische Ausbringmenge ermittelte Wert zuführbar ist, wobei das Verfahren die folgenden Verfahrensschritte umfasst:
• Durchführen eines Abdreh- und/oder Kalibriervorgangs zur Bestimmung zumindest eines Werts für die theoretische Ausbringmenge,
• Bestimmen zumindest eines Messwertes mittels der Füllstandserfassungsvorrichtung,
• Bestimmen des Füllstandes des Vorratsbehälters (1) durch die Auswerteeinheit (1), basierend auf der Kombination des zumindest einen Messwertes der Füllstandserfassungsvorrichtung mit dem zumindest einen Wert für die theoretische Ausbringmenge.

6. Verfahren nach Anspruch 5, **dadurch gekennzeichnet, dass** die Auswerteeinheit (7) den zumindest einen Messwert der Füllstandserfassungsvorrichtung mit dem zumindest einem für die theoretische Ausbringmenge ermittelten Wert über einen Algorithmus kombiniert und der Algorithmus einen Kalman-Filter umfasst, wobei insbesondere von dem Kalman-Filter verwendete Gewichtungsfaktoren in Abhängigkeit von dem Betrieb der Sämaschine angepasst werden

## Claims

1. Agricultural seed drill having a storage container (1) for storing at least one material which is to be discharged, having at least one filling level-sensing device which is assigned to the storage container (1), having an evaluation unit (7) which is connected to the filling level-sensing device and comprises a memory unit, wherein the evaluation unit (7) has a display and/or input element (9), with devices for carrying out a calibration process in order to determine a value for the theoretical discharge quantity of the seed drill, wherein a value which can be acquired for the theoretical discharge quantity can be fed to the evaluation unit (7), **characterized in that** the evaluation unit (7) is embodied in such a way that it combines at least one measured value of the filling level-sensing device with at least one value, acquired for the theoretical discharge quantity, for determining the filling level of the material stored in the storage container (1).

2. Seed drill according to Claim 1, **characterized in that** the evaluation unit (7) is embodied in such a way that it combines the at least one measured value of the filling level-sensing device with the at least one value, acquired for the theoretical discharge quantity, by means of an algorithm, wherein the algorithm comprises a Kalman filter.

3. Seed drill according to at least one of the preceding claims, **characterized in that** the evaluation unit (7) is embodied in such a way that it adapts the weighting factors, used by the Kalman filter, as a function of the operation of the seed drill.

4. Seed drill according to at least one of the preceding claims, **characterized in that** the evaluation unit (7) is embodied in such a way that it adapts the weighting factors, used by the Kalman filter, as a function of the speed of the seed drill and/or the inclination of the seed drill and/or as a function of whether the seed drill is operated in a filling mode, a turning mode or a discharge mode.

5. Method for determining the filling level of a storage container (1) of an agricultural seed drill having a storage container (1) for storing at least one material to be discharged, having at least one filling level-sensing device which is assigned to the storage container (1), having an evaluation unit (7) which is connected to the filling level-sensing device, wherein the evaluation unit (7) has a display and/or input element (9), having devices for carrying out a calibration process of the seed drill in order to acquire a value for the theoretical discharge quantity of the seed drill, wherein a value which is acquired for the theoretical discharge quantity can be fed to the evaluation unit (7), wherein the method comprises the following method steps:
• Carrying out a calibration process for determining at least one value for the theoretical discharge quantity,
• Determining at least one measured value by means of the filling level-sensing device,
• Determining the filling level of the storage container (1) by means of the evaluation unit (1), on the basis of the combination of the at least one measured value of the filling level-sensing device with the at least one value for the theoretical discharge quantity.

6. Method according to Claim 5, **characterized in that** the evaluation unit (7) combines the at least one measured value of the filling level-sensing device with the at least one value, acquired for the theoretical discharge quantity, by means of an algorithm, and the algorithm comprises a Kalman filter, wherein, in particular, weighting factors used by the Kalman filter are adapted as a function of the operation of the seed drill.

## Revendications

1. Semoir agricole comprenant un réservoir (1) servant à stocker au moins un matériau à épandre, comprenant au moins un arrangement de détection de niveau de remplissage associé au réservoir (1), comprenant une unité d'interprétation (7) reliée à l'arrangement de détection de niveau de remplissage et comprenant une unité à mémoire, l'unité d'interprétation (7) possédant un élément d'affichage et/ou de saisie (9), comprenant des dispositifs destinés à réaliser une opération de contrôle de débit et/ou d'étalonnage en vue de déterminer une valeur pour la quantité d'épandage théorique du semoir, une valeur déterminée pour la quantité d'épandage théorique pouvant être acheminée à l'unité d'interprétation (7), **caractérisé en ce que** l'unité d'interprétation (7) est configurée de telle sorte qu'elle combine au moins une valeur mesurée de l'arrangement de détection de niveau de remplissage avec au moins une valeur déterminée pour la quantité d'épandage théorique en vue de déterminer le niveau de remplissage du matériau stocké dans le réservoir (1).

2. Semoir selon la revendication 1, **caractérisé en ce que** l'unité d'interprétation (7) est configurée de telle sorte qu'elle combine l'au moins une valeur mesurée de l'arrangement de détection de niveau de remplissage avec l'au moins une valeur déterminée pour la quantité d'épandage théorique par le biais d'un algorithme, l'algorithme comprenant un filtre de Kalman.

3. Semoir selon au moins l'une des revendications précédentes, **caractérisé en ce que** l'unité d'interprétation (7) est configurée de telle sorte qu'elle adapte les facteurs de pondération utilisés par le filtre de Kalman en fonction du fonctionnement du semoir.

4. Semoir selon au moins l'une des revendications précédentes, **caractérisé en ce que** l'unité d'interprétation (7) est configurée de telle sorte qu'elle adapte les facteurs de pondération utilisés par le filtre de Kalman en fonction de la vitesse du semoir et/ou de l'inclinaison du semoir et/ou en fonction du fait que le semoir est utilisé dans un mode de remplissage, un mode de changement de direction ou un mode d'épandage.

5. Procédé de détermination du niveau de remplissage d'un réservoir (1) d'un semoir agricole comprenant un réservoir (1) servant à stocker au moins un matériau à épandre, comprenant au moins un arrangement de détection de niveau de remplissage associé au réservoir (1), comprenant une unité d'interprétation (7) reliée à l'arrangement de détection de niveau de remplissage, l'unité d'interprétation (7) possédant un élément d'affichage et/ou de saisie (9), comprenant des dispositifs destinés à réaliser une opération de contrôle de débit et/ou d'étalonnage du semoir en vue de déterminer une valeur pour la quantité d'épandage théorique du semoir, une valeur déterminée pour la quantité d'épandage théorique pouvant être acheminée à l'unité d'interprétation (7), le procédé comprenant les étapes suivantes :
* réalisation de l'opération de contrôle de débit et/ou d'étalonnage en vue de déterminer au moins une valeur pour la quantité d'épandage théorique,
* détermination d'au moins une valeur mesurée au moyen de l'arrangement de détection de niveau de remplissage,
* détermination du niveau de remplissage d'un réservoir (1) par l'unité d'interprétation (1) en se basant sur la combinaison de l'au moins une valeur mesurée de l'arrangement de détection de niveau de remplissage avec l'au moins une valeur pour la quantité d'épandage théorique.

6. Procédé selon la revendication 5, **caractérisé en ce que** l'unité d'interprétation (7) combine l'au moins une valeur mesurée de l'arrangement de détection de niveau de remplissage avec l'au moins une valeur déterminée pour la quantité d'épandage théorique par le biais d'un algorithme et l'algorithme comprend un filtre de Kalman, les facteurs de pondération utilisés par le filtre de Kalman étant notamment adaptés en fonction du fonctionnement du semoir.
